# EUROPÄISCHE PATENTSCHRIFT

(11) **EP 2 734 316 B1**
(45) Veröffentlichungstag und Bekanntmachung des Hinweises auf die Patenterteilung: **18.05.2016**
(21) Anmeldenummer: 12729645.7
(22) Anmeldetag: 27.06.2012
(51) Int. Cl.: B21D 39/04, B25B 27/10

(54) **HANDGEFÜHRTES PRESSWERKZEUG**
HANDHELD PRESSING TOOL
PRESSE MANUELLE

(30) Priorität: 21.07.2011 DE 202011103530 U
(43) Veröffentlichungstag der Anmeldung: 28.05.2014
(73) Patentinhaber: Novopress GmbH Pressen und Presswerkzeuge & Co. KG, 41460 Neuss (DE)
(72) Erfinder: GOTTSCHALDT, Gunnar, 41516 Grevenbroich (DE)
(74) Vertreter: von Kreisler Selting Werner - Partnerschaft von Patentanwälten und Rechtsanwälten mbB
(86) Internationale Anmeldenummer: PCT/EP2012/062401
(87) Internationale Veröffentlichungsnummer: WO 2013/010762

(56) Entgegenhaltungen:
- EP-A2- 1 319 475
- DE-A1-102006 003 044
- DE-A1-102006 026 552
- DE-A1-102008 024 018
- DE-U1- 20 202 200

## Beschreibung

Die Erfindung betrifft ein handgeführtes Presswerkzeug, das insbesondere zum Verpressen von Pressfittings oder Kabelschuhen geeignet ist, gemäß dem Oberbegriff des Anspruchs 1.

Handgeführte Presswerkzeuge weisen beispielsweise einen elektrohydraulischen Antrieb auf. Hierbei wird durch eine elektromotorische Antriebseinrichtung eine Hydraulikpumpe betätigt, die ein Kolbenelement bewegt. Das Kolbenelement ist mit einem Betätigungselement wie einem Rollenkopf verbunden. Zum Schließen von mindestens zwei relativ zueinander bewegbaren Presselementen, d.h. zum Durchführen der Verpressung wirkt das Betätigungselement auf mindestens eines der Presselemente ein. Bei zangenartig ausgebildeten Presselementen sind zwei Presselemente schwenkbar an dem handgeführten Presswerkzeug angeordnet, wobei das Betätigungselement, das insbesondere einen Rollenkopf aufweist, auf beide Schwenkarme der Presselemente einwirkt. Durch Verschieben des Kolbenelements und somit auch des Rollenkopfes in Längsrichtung werden die beiden Schwenkarme auseinandergedrückt. Da die beiden Presselemente um eine Schwenkachse verschwenkbar sind, bewirkt das Auseinanderdrücken der Schwenkarme ein Schließen der die Pressbacken tragenden oder ausbildenden Enden des Presselements. In Abhängigkeit der Hublänge des Kolbenelements sind handgeführte Presswerkzeuge jeweils für unterschiedliche Presselemente geeignet, wobei bei einem langen Hub die Presselemente über einen langen Pressweg bewegt werden. Dies ist beispielsweise der Fall, wenn mit derartigen Presselementen Pressfittings mit einem großen Außendurchmesser verpresst werden. Da es hierbei erforderlich ist, die beiden zangenartigen Presselemente weit zu öffnen, um diese um das Pressfitting mit großem Außendurchmesser legen zu können. Wenn derartige handgeführte Presswerkzeuge mit kleinem Hub beispielsweise auch für Pressfittings mit geringerem Außendurchmesser verwendet werden, hat dies zur Folge, dass das Verpressen des Pressfittings nur mit Hilfe des letzten Bereichs des Presshubs erfolgt. Es besteht somit ein großer Leerhub. Dies hat den Nachteil, dass für die Verpressung eine relativ lange Verpresszeit erforderlich ist.

Um mit einem handgeführten Presswerkzeug mit Hilfe unterschiedlicher Presselemente Verpressungen mit erforderlichem langen Hub und auch erforderlichem kurzen Hub durchführen zu können, ist aus DE 10 2006 003 044 ein Presswerkzeug mit verstellbarem Anschlag bekannt. Hierzu weist das in DE 10 2006 003 044 beschriebene Presswerkzeug einen in Längsrichtung des Kolbenelements verstellbaren Anschlag auf. Dieser kann vom Benutzer in unterschiedlichen Endstellungen angeordnet werden. Vor der Durchführung einer Verpressung muss der Benutzer somit von Hand den Endanschlag zur Justage in Längsrichtung verschieben. Dies hat den Nachteil, dass der Benutzer vor jeder Verpressung entscheiden muss, welcher Hub mit dem Pressgerät gefahren wird. Dies stellt einen erheblichen Aufwand dar und birgt die Gefahr von Fehlbedienungen in sich.

Aufgabe der Erfindung ist es, ein handgeführtes Presswerkzeug zu schaffen, mit dem auf einfache Weise in Abhängigkeit der in das Presswerkzeug eingesetzten Presselemente unterschiedliche Verpresshübe durchgeführt werden können.

Die Lösung der Aufgabe erfolgt erfindungsgemäß durch die Merkmale des Anspruchs 1.

Das erfindungsgemäße handgeführte Presswerkzeug, das insbesondere zur Verpressung von Pressfittings und/ oder Kabelschuhen geeignet ist, weist mindestens zwei relativ zueinander bewegbare Presselemente auf. Die Presselemente tragen die Pressbacken oder sind einstückig mit den Pressbacken ausgebildet. Vorzugsweise handelt es sich um zwei zangenartig ausgebildete Presselemente, die über eine insbesondere gemeinsame Schwenkachse mit einem Gehäuse des handgeführten Presswerkzeugs verbunden sind. Zur Bewegung mindestens eines der beiden Presselemente ist ein hydraulisch betriebenes Kolbenelement vorgesehen. Zum Betreiben, d.h. Bewegen des Kolbenelements in Längsrichtung zur Durchführung der Verpressung kann das Kolbenelement über eine Hydraulikpumpe, die beispielsweise von einem Elektromotor angetrieben ist, betätigt werden. Nach erfolgter Verpressung wird das Kolbenelement in die Ausgangsstellung zurückgeführt, indem die Pressbacken des Presselements auseinanderbewegt werden. Gegebenenfalls ist eine Feder vorgesehen, die das Kolbenelement in eine Ausgangsstellung zurückdrückt.

Das Kolbenelement weist an dem in Richtung der Presselemente weisenden Ende mindestens ein Betätigungselement zum Bewegen mindestens eines der Presselemente auf. Erfindungsgemäß ist ein Bremselement vorgesehen, das beim Zurückführen des Kolbenelements auf das Kolbenelement und/ oder das Betätigungselement einwirkt. Erfindungsgemäß ist das Bremselement derart ausgebildet, dass das Kolbenelement zunächst in eine Kurzhub-Ausgangsstellung zurückgeführt wird. Hierbei handelt es sich um eine Ausgangsstellung, von der aus das Kolbenelement nur einen relativ kurzen Hub zum Schließen der Presselemente durchführt. Bei Verwendung des handgeführten Presswerkzeugs in der Kurzhub-Ausgangsstellung dient dieses beispielsweise zum Verpressen von Pressfittings mit relativ geringen Durchmessern.

Erfindungsgemäß kann das Bremselement zum Zurückführen des Kolbenelements in eine Langhub-Ausgangsstellung überwunden werden.

Insbesondere ist dies dadurch möglich, dass bei Verwendung entsprechender Presselemente, die einen langen Hub des Kolbenelements benötigen, die Pressbacken der Presselemente insbesondere von Hand weiter auseinandergedrückt werden. Hierbei erfolgt sodann erfindungsgemäß automatisch ein weiteres Zurückdrücken des Kolbenelements in die Langhub-Ausgangsstellung. Dies ist erfindungsgemäß insbesondere vorteilhaft, da durch das zur Vorbereitung der Verpressung zwingend erforderliche Auseinanderbewegen bzw. Öffnen der Pressbacken, automatisch ein Zurückdrücken des Kolbenelements in die Langhub-Ausgangsstellung erfolgt. Es ist hierbei erfindungsgemäß nicht erforderlich an dem Presswerkzeug eine Einstellung vorzunehmen. Insbesondere muss kein Anschlag justiert werden. Hierdurch ist die. Bedienung des Presswerkzeugs vereinfacht und Fehlbedienungen sind vermieden.

Erfindungsgemäß übt das Bremselement auf das Kolbenelement und/ oder das Betätigungselement eine Bremskraft aus. Hierzu kann ein Halteelement vorgesehen sein, das vorzugsweise federbelastet ist. Hierbei ist es möglich eine gesonderte mit dem Haltelement zusammenwirkende Feder, wie eine Spiralfeder vorzusehen und/ oder das Halteelement elastisch auszubilden bzw. elastisch mit einem Gehäuse des handgeführten Presswerkzeugs zu verbinden. Aufgrund des Vorsehens eines derartigen Halteelements ist es auf einfache Weise möglich, das Kolbenelement in die Langhub-Ausgangsstellung zurückzuführen, da durch einfaches Öffnen der Presselemente das Bremselement überwunden wird. Insbesondere ist das Halteelement zum Zurückführen des Kolbenelements in die Langhub-Ausgangsstellung komprimierbar und/ oder radial verschiebbar. Beispielsweise wird das Halteelement zum Überwinden der Bremskraft in das Gehäuse des handgeführten Presswerkzeugs zurückgedrückt. Dies kann insbesondere über die Schwenkarme der Presselemente erfolgen.

Vorzugsweise weist das Betätigungselement einen Rollenkopf auf. Insbesondere wenn zwei Presselemente vorgesehen sind, ist es bevorzugt, dass der Rollenkopf zwei Rollen aufweist, wobei jeweils eine der Rollen auf eines der Presselemente, insbesondere auf den jeweiligen Schwenkarm der Presselemente einwirkt. Ein Verschieben des Kolbenelements in Längsrichtung bewirkt somit, dass über die Rollen, die an den Schwenkarmen anliegen, die beiden Schwenkarme auseinandergedrückt werden. Die insbesondere einander gegenüberliegenden Schwenkarme bewirken aufgrund der Lagerung über eine mit dem Gehäuse des Presswerkzeugs verbundene Schwenkachse ein Zusammendrücken der Pressbacken. Besonders bevorzugt ist es hierbei, dass die Schwenkarme einander gegenüberliegende Flanken aufweisen, die konvex gekrümmt sind.

Das Zurückführen des Betätigungselements und somit des Kolbenelements erfolgt hierbei vorzugsweise durch Öffnen der Presselemente, wobei das Zurückführen in die Kurzhub-Ausgangsstellung durch ein Federelement unterstützt oder auch ausschließlich durch ein Federelement erfolgen kann. Das Überwinden der Bremse erfolgt stets durch ein weiteres Öffnen der Presselemente, so dass das Betätigungselement und das Kolbenelement automatisch in die Langhub-Ausgangsstellung zurückgeführt wird, wobei hierbei die vom Bremselement aufgebrachte Bremskraft überwunden wird.

Nachfolgend wird die Erfindung anhand einer bevorzugten Ausführungsform unter Bezugnahme auf die anliegenden Zeichnungen näher erläutert.

Es zeigen:
- Figur 1: eine schematische teilweise geschnittene Seitenansicht eines Teils eines Presswerkzeugs, in das Presselemente eingesetzt sind, die einen kurzen Presshub erfordern in geschlossener Stellung,
- Figur 2: das in Figur 1 dargestellte Presswerkzeug, bei dem die Presselemente geöffnet sind,
- Figur 3: einen schematischen Querschnitt des Presswerkzeugs entlang der Linie III-III in Figur 2, wobei keine Presselemente dargestellt sind,
- Figur 4a bis 4c: einen der in Figur 2 dargestellten Ansicht entsprechenden schematischen Längsschnitt des Presswerkzeugs, wobei Presselemente eingesetzt sind, die einen langen Presshub erfordern, und
- Figur 5: einen schematischen Querschnitt des Presswerkzeugs entlang der Linie V-V in Figur 4, wobei keine Presselemente dargestellt sind.

In den Figuren ist jeweils nur der für die Erfindung relevante vordere Teil des Presswerkzeugs, in dem die Presselemente aufgenommen sind, dargestellt.

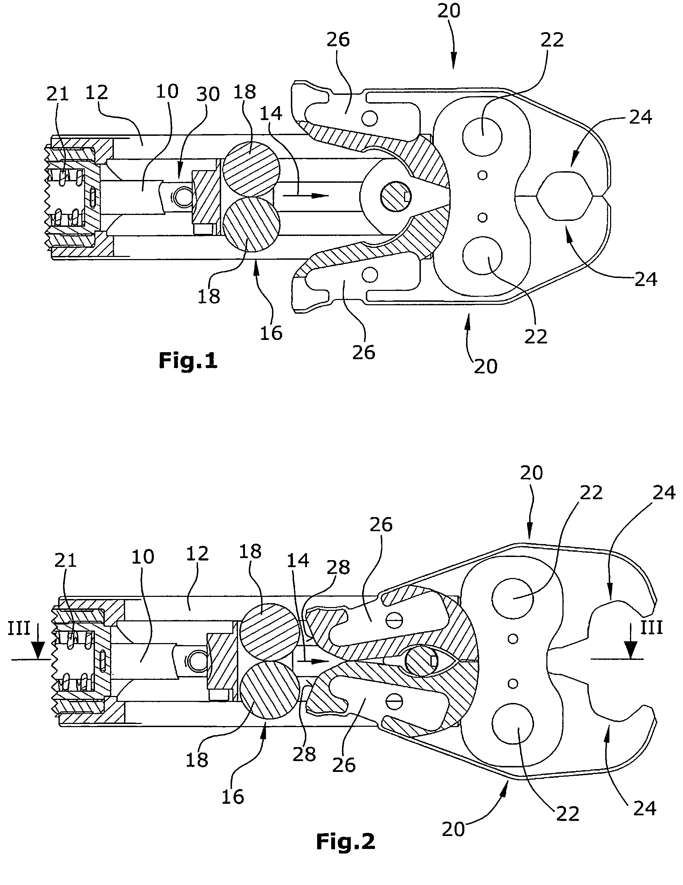

Ein Kolbenelement 10 ist in einem Gehäuse 12 des handgeführten Presswerkzeugs angeordnet und wird über eine nicht dargestellte Hydraulikpumpe in Längsrichtung 14 verschoben. Die Hydraulikpumpe wird durch eine ebenfalls nicht dargestellte elektromotorische Antriebseinrichtung betätigt. Das Kolbenelement 10 ist mit einem Betätigungselement verbunden, das im dargestellten Ausführungsbeispiel einen Rollenkopf 16 aufweist. Der Rollenkopf 16 weist zwei Rollen 18 auf, die in Figur 1 im Schnitt dargestellt sind.

Ferner sind in dem Gehäuse 12 zwei Presselemente 20 über je eine Schwenkachse 22 schwenkbar gehalten. Bei den in Figur 1 dargestellten Presselementen 20 handelt es sich um Presselemente, die mit einem kurzen Hub betrieben werden können. Die beiden Presselemente 20 sind jeweils einstückig mit Pressbacken 24 ausgebildet, wobei die Pressbacken 24 beispielsweise zum Verpressen eines Pressfittings dienen.

Nach dem Verpressen eines Pressfittings oder dergleichen befinden sich die Presselemente 20 in der in Figur 1 dargestellten geschlossenen Stellung. Die Verpressung ist hierbei abgeschlossen. In Figur 1 ist das Kolbenelement auch bereits wieder in die Kurzhub-Ausgangsstellung zurückgedrückt. Dies erfolgt bei dem hier dargestellten Ausführungsbeispiel über eine Feder 21, die nach Abschließen des Pressvorgangs das Kolbenelement 10 zusammen mit dem Betätigungselement 16 in die Kurzhub-Ausgangsstellung zurückdrückt. Hierdurch wird die Hydraulikflüssigkeit beispielsweise in ein Hydraulikreservoir zurückgedrückt. Zum Verschieben des Kolbenelements 10 in Längsrichtung 14 erfolgt ein Fördern der Hydraulikflüssigkeit mit Hilfe der nicht dargestellten Hydraulikpumpe aus dem Hydraulikreservoir.

Zum Durchführen einer erneuten Verpressung mit Hilfe der einen kurzen Hub erfordernden Presselemente 20 werden die Presselemente 20 von Hand geöffnet. Dies erfolgt durch Auseinanderdrücken der beiden Pressbacken 24 bzw. Zusammendrücken von Schwenkhebeln 26 der beiden Presselemente 20. Hierdurch werden die Presselemente 20 in die in Figur 2 dargestellte Ausgangsstellung überführt. Zur Durchführung der nächsten Verpressung und somit zum Schließen der beiden Presselemente 20 erfolgt mit Hilfe der Hydraulikpumpe wiederum ein Bewegen des Kolbenelements 10 in Richtung des Pfeils 14. Hierdurch gelangen die beiden Rollen 18 des Rollenkopfes 16 in Anlage an die beiden Flanken 28 der Schwenkarme 26 und drücken die Schwenkarme 26 auseinander. Hierdurch erfolgt ein Verschwenken der beiden Presselemente 20 um die Schwenkachse 22 und somit ein Schließen der Pressbacken 24.

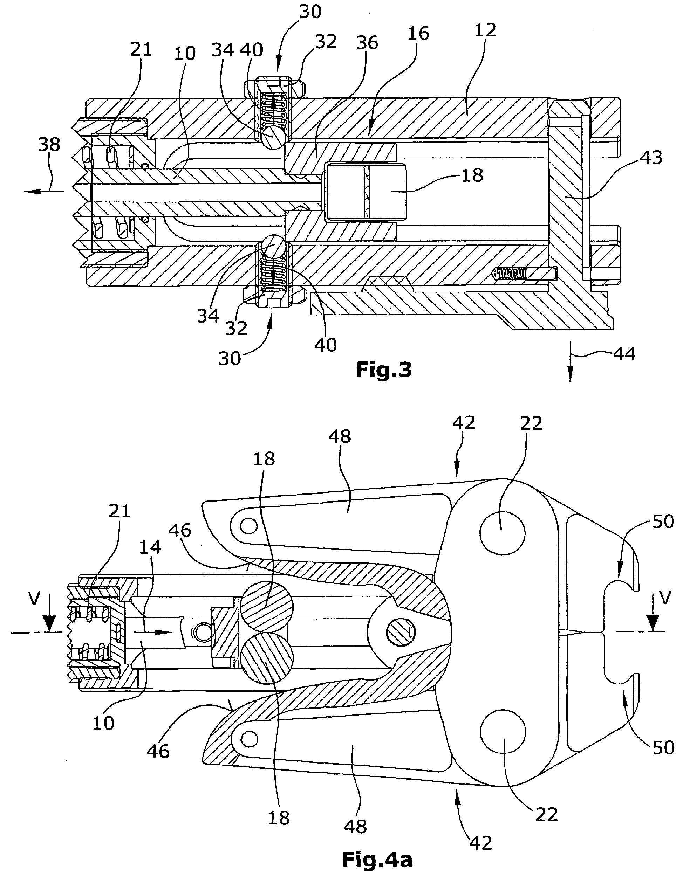

Das Zurückdrücken des Kolbenelements 10, das im dargestellten Ausführungsbeispiel gemäß der Figuren 1 bis 3 durch die Feder 21 erfolgt, wird aufgrund des Vorsehens eines Bremselements 30 (Figur 3) nur bis in eine Kurzhub-Ausgangsstellung bewirkt. Hierzu weist das Bremselement 30 ein Halteelement 32 auf. Das Halteelement 32 weist eine federbelastete Kugel 34 auf. Diese wirkt auf ein Trägerelement 36 des Rollenkopfes 16 derart ein, das der Rollenkopf 16 und somit auch das mit dem Rollenkopf 16 verbundene Kolbenelement 10 in der in Figur 3 dargestellten Kurzhub-Ausgangsstellung abgebremst wird.

Im dargestellten Ausführungsbeispiel sind, um insbesondere ein Verkanten des Rollenkopfes 16 zu vermeiden, zwei einander gegenüberliegende Bremselemente 30 vorgesehen. Die beiden Bremselemente 30 sind identisch ausgebildet.

Um ein weiteres Zurückdrücken des Kolbenelements 10 zusammen mit dem Rollenkopf 16 in Richtung eines Pfeils 38 bewirken zu können, sind die beiden Halteelemente 32 jeweils in Richtung eines Pfeils 40 bewegbar bzw. in das Gehäuse 12 hineindrückbar. Die Bewegung in Richtung der Pfeile 40 erfolgen insbesondere entgegen einer Federkraft, wobei es ebenso möglich ist, dass die Bewegung durch eine elastische Verformung der Halteelemente 32 bewirkt wird.

Ein derartiges Überwinden der Bremswirkung der Bremselemente 30 ist erforderlich und zweckmäßig, um Presselemente 42 (Figur 4a bis 4c), die einen längeren Hub erforderlich machen, in das Presswerkzeug einsetzen zu können.

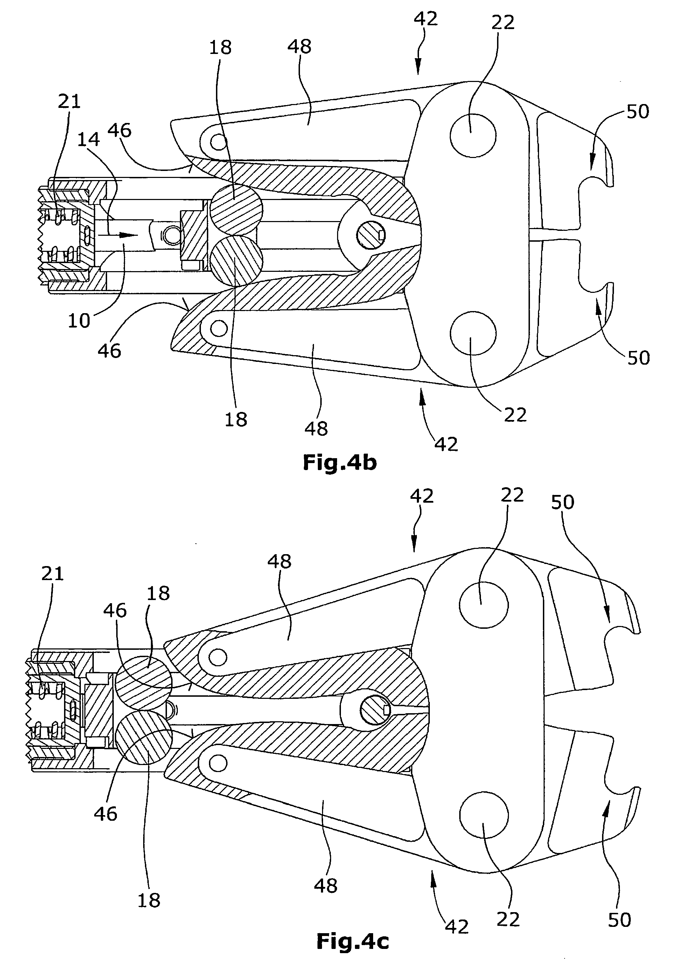

Als Presswerkzeug werden Presselemente 42 mit langem Hub (Figur 4a) eingesetzt, wobei sich das Presswerkzeug noch in der Stellung für kurzhubige Presselemente befindet und insofern das Bremselement 30 noch auf das Betätigungselement 16 einwirkt. Durch Öffnen der Presselemente 42 gelangen die beiden Flanken 46 der Schwenkhebel 26 in Anlage an die beiden Rollen 18 des Rollenkopfes 16 (Figur 4b), wobei durch ein weiteres Öffnen der Presselemente (Figur 4c) die Bremskraft des Bremselements 30 überwunden wird. Nach Überwinden der Bremskraft des Bremselements 30 erfolgt somit durch die Feder 21 ein vollständiges Zurückziehen des Kolbenelements 10 zusammen mit dem Betätigungselement 16 in die Langhubstellung.

Das Austauschen der Presselemente 20 durch die Presselemente 42 erfolgt durch Zurückziehen eines Verriegelungselements 43 (Figur 3) in Richtung eines Pfeils 44. Sodann können die Presselemente 20 aus dem Presswerkzeug herausgenommen und die Presselemente 42 in das Presswerkzeug eingesetzt werden. Durch das Einsetzen der Presselemente 42 drücken Flanken 46 der beiden Schwenkarme 48 der Presselemente 42 auf die Rollen 18, so dass diese in Richtung eines Pfeils 38 (Figur 3) entgegen der Wirkung der beiden Bremselemente 30 weiter zurückgedrückt werden. Der Rollenkopf 16 sowie das Kolbenelement 10 befinden sich somit in Figur 4c in der Langhub-Ausgangsstellung. Zum Schließen der Pressbacken 50 der Presselemente 42 erfolgt wiederum ein Verschieben des Kolbenelements 10 in Richtung des Pfeils 14 durch Betätigen der Hydraulikpumpe.

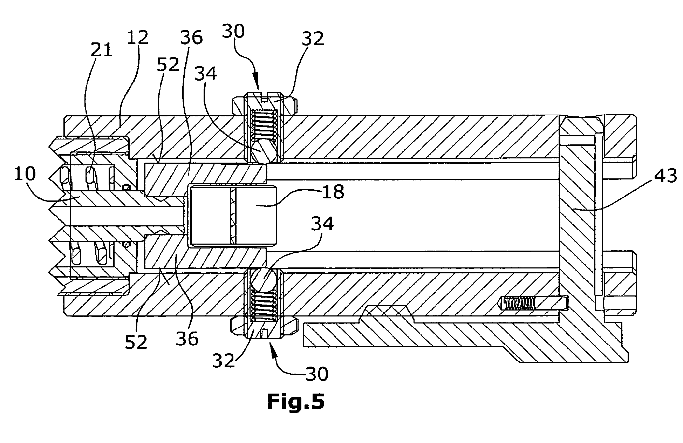

Wie insbesondere aus Figur 5 ersichtlich ist, befinden sich die Halteelemente 32 der Bremselemente 30 in einer zurückgedrückten Stellung und liegen hierbei jeweils an einer Außenseite 52 des Trägerelements 36 an.

Bei einer alternativen Ausführungsform der Bremselemente 30 sind diese vollständig innerhalb des Gehäuses 12 angeordnet. Die Bremselemente weisen ebenfalls Halteelemente 32 auf, die über eine Feder belastet sind, wobei die Feder eine nach innen in Richtung des Kolbenelements 10 wirkende Kraft ausübt. Ein Zurückdrücken der Halteelemente 32 erfolgt entgegen der Federkraft.

## Patentansprüche

1. Handgeführtes Presswerkzeug, insbesondere zum Verpressen von Pressfittings und/ oder Kabelschuhen, mit
mindestens zwei relativ zueinander bewegbaren Presselementen (20, 42),
einem hydraulisch betriebenen Kolbenelement (10), das über mindestens ein Betätigungselement (16) zum Bewegen mindestens eines der Presselemente (20, 42) auf dieses einwirkt und
einer auf das Kolbenelement (10) und/ oder das Betätigungselement (16) beim Zurückführen in eine Kurzhub-Ausgangsstellung einwirkenden Bremselement (30) **dadurch gekennzeichnet, dass** beim Zurückdrücken des Betätigungselements (16) in eine Langhub-Ausgangsstellung die vom Bremselement (30) auf das Kolbenelement (10) und/ oder das Betätigungselement (16) einwirkende Bremskraft überwunden wird.

2. Handgeführtes Presswerkzeug nach Anspruch 1, **dadurch gekennzeichnet, dass** das Bremselement (30) mindestens ein auf das Kolbenelement (10) und/ oder das Betätigungselement (16) ein eine Bremskraft ausübendes Halteelement (32) aufweist, das vorzugsweise federbelastet ist.

3. Handgeführtes Presswerkzeug nach Anspruch 2, **dadurch gekennzeichnet, dass** das Halteelement (32) zum Zurückführen des Kolbenelements (10) in die Langhub-Ausgangsstellung komprimierbar und/ oder insbesondere radial verschiebbar ist.

4. Handgeführtes Presswerkzeug nach Anspruch 2 oder 3, **dadurch gekennzeichnet, dass** zwei einander gegenüberliegende Halteelemente (32) vorgesehen sind.

5. Handgeführtes Presswerkzeug nach einem der Ansprüche 1 bis 4, **dadurch gekennzeichnet, dass** das Betätigungselement einen, vorzugsweise zwei Rollen (18) aufweisenden Rollenkopf (16) aufweist.

6. Handgeführtes Presswerkzeug nach einem der Ansprüche 1 bis 5, **dadurch gekennzeichnet, dass** das Betätigungselement, vorzugsweise der Rollenkopf (16) auf einen Schwenkarm (26, 48) des mindestens einen Presselements (20, 42) einwirkt.

7. Handgeführtes Presswerkzeug nach einem der Ansprüche 1 bis 6, **dadurch gekennzeichnet, dass** beim Öffnen der Presselemente (20, 42) das Betätigungselement (16) insbesondere von dem mindestens einen Schwenkarm (26, 48) in die entsprechende Ausgangsstellung zurückgedrückt wird.

8. Handgeführtes Presswerkzeug nach Anspruch 7, **dadurch gekennzeichnet, dass** beim Öffnen der Presselemente (20, 42) durch aufeinander Zubewegen der Schwenkarme (26, 48) diese auf das Betätigungselement, insbesondere den Rollenkopf (16) derart einwirken, dass das Betätigungselement (16) und das Kolbenelement (10) in eine Ausgangsstellung zurückgedrückt wird.

9. Handgeführtes Presswerkzeug nach einem der Ansprüche 6 bis 8, **dadurch gekennzeichnet, dass** die Schwenkarme (26, 48) einander gegenüberliegende konvex gekrümmte Flanken (28, 46) aufweisen.

## Claims

1. A handheld pressing tool, in particular for the crimping of press fittings and/or cable lugs, comprising
at least two pressing elements (20, 42) movable with respect to each other,
a hydraulically operated piston element (10) acting on at least one pressing element (20, 42) via at least one actuating element (16) to move the same, and
a brake element (30) acting on the piston element (10) and/or the actuating element (16) as the same are returned to a short-stroke starting position, **characterized in that** the braking force exerted by the brake element (30) on the piston element (10) and/or the actuating element (16) is overcome while the actuating element (16) is pushed back to the long-stroke starting position.

2. The handheld pressing tool of claim 1, **characterized in that** the brake element (30) comprises at least one, preferably spring-loaded retaining element (32) exerting a braking force on the piston element (10) and/or the actuating element (16).

3. The handheld pressing tool of claim 2, **characterized in that** the retaining element (32) is compressible and/or in particular radially displaceable for the purpose of returning the piston element (10) to the long-stroke starting position.

4. The handheld pressing tool of claim 2 or 3, **characterized in that** two mutually opposite retaining elements (32) are provided.

5. The handheld pressing tool of one of claims 1 to 4, **characterized in that** the actuating element comprises a roller head (16) preferably including two rollers (18).

6. The handheld pressing tool of one of claims 1 to 5, **characterized in that** the actuating element, preferably the roller head (16), acts on a pivoting arm (26, 48) of the at least one pressing element (20, 42).

7. The handheld pressing tool of one of claims 1 to 6, **characterized in that**, when the pressing elements (20, 42) are opened, the actuating element (16) is pushed back to the corresponding starting position in particular by the at least one pivoting arm (26, 48).

8. The handheld pressing tool of claim 7, **characterized in that**, when the pressing elements (20, 42) are opened by moving the pivoting arms (26, 48) towards each other, the latter act on the actuating element, in particular on the roller head (16), such that the actuating element (16) and the piston element (10) are pushed back to a starting position.

9. The handheld pressing tool of one of claims 6 to 8, **characterized in that** the pivoting arms (26, 48) have mutually opposite convexly curved flanks (28, 46).

## Revendications

1. Outil de sertissage à main, destiné en particulier à sertir des raccords à sertir et/ou des cosses de câbles, comprenant
au moins deux éléments de sertissage (20, 42) mobiles l'un par rapport à l'autre,
un élément de piston (10) à commande hydraulique qui, pour déplacer l'un au moins des éléments de sertissage (20, 42), agit sur celui-ci par le biais d'au moins un élément d'actionnement (16) et
un élément de frein (30) qui agit sur l'élément de piston (10) et/ou sur l'élément d'actionnement (16) lors du retour dans une position de départ à faible course, **caractérisé en ce que** la force de freinage, avec laquelle l'élément de freinage (30) agit sur l'élément de piston (10) et/ou l'élément d'actionnement (16), est surmontée lorsque l'élément d'actionnement (16) est repoussé dans une position de départ à longue course.

2. Outil de sertissage à main selon la revendication 1, **caractérisé en ce que** l'élément de freinage (30) comporte au moins un élément de retenue (32) qui est de préférence contraint par ressort et qui exerce une force de freinage sur l'élément de piston (10) et/ou l'élément d'actionnement (16).

3. Outil de sertissage à main selon la revendication 2, **caractérisé en ce que** l'élément de retenue (32) peut être comprimé et/ou en particulier déplacé radialement pour ramener l'élément de piston (10) dans la position de départ à longue course.

4. Outil de sertissage à main selon la revendication 2 ou 3, **caractérisé en ce qu'**il est prévu deux éléments de retenue (32) opposés l'un à l'autre.

5. Outil de sertissage à main selon l'une des revendications 1 à 4, **caractérisé en ce que** l'élément d'actionnement comporte une tête à galets (16) qui est pourvue de préférence de deux galets (18).

6. Outil de sertissage à main selon l'une des revendications 1 à 5, **caractérisé en ce que** l'élément d'actionnement, de préférence la tête à galets (16), agit sur un bras pivotant (26, 48) de l'au moins un élément de sertissage (20, 42).

7. Outil de sertissage à main selon l'une des revendications 1 à 6, **caractérisé en ce que**, lors de l'ouverture des éléments de sertissage (20, 42), l'élément d'actionnement (16) est repoussé dans la position initiale correspondante, notamment par l'au moins un bras pivotant (26, 48).

8. Outil de sertissage à main selon la revendication 7, **caractérisé en ce que**, lors de l'ouverture des éléments de sertissage (20, 42) par rapprochement des bras pivotants (26, 48), lesdits bras pivotants agissent sur l'élément d'actionnement, en particulier la tête à galets (16) de telle sorte que l'élément d'actionnement (16) et l'élément de piston (10) sont repoussés dans une position de départ.

9. Outil de sertissage à main selon l'une des revendications 6 à 8, **caractérisé en ce que** les bras pivotants (26, 48) comportent des flancs (28, 46) incurvés convexes opposés l'un à l'autre.
